# FASCICULE DE BREVET EUROPEEN

(11) **EP 1 106 082 B1**
(45) Date de publication et mention de la délivrance du brevet: **03.05.2006**
(21) Numéro de dépôt: 99204244.0
(22) Date de dépôt: 10.12.1999
(51) Int. Cl.: A23L 1/39, A23L 1/212, A23L 1/0522, A23L 1/325

(54) **Produit culinaire à pouvoir crémeux**
Pastöses gekochtes Lebensmittel
Creamy cooked food product

(43) Date de publication de la demande: 13.06.2001
(73) Titulaire: SOCIETE DES PRODUITS NESTLE S.A., 1800 Vevey (CH)
(72) Inventeur: Moreau, Jean, 6000 Beauvais (FR); Monnois, Sophie, 60510 Velennes (FR)
(74) Mandataire: Thomas, Alain

(56) Documents cités:
- EP-A- 0 792 587
- WO-A-98/31240
- FR-A- 2 283 636
- DATABASE WPI Week 199910 Derwent Publications Ltd., London, GB; AN 1999-109247 XP002138215 & JP 10 327822 A (HOUSE SHOKUHIN)

## Description

La présente invention a pour objet un produit culinaire à pouvoir crémeux présentant en outre une forte stabilité lors de procédés industriels et/ou ménagers de congélation/décongélation et/ou chauffage. L'invention concerne aussi le procédé de fabrication d'un tel produit.

EP 0173646 décrit un produit alimentaire épaississant présenté sous forme portionnable à l'état stérilisé. Le procédé de fabrication d'un tel produit consiste à préparer un roux par stérilisation d'un mélange de matière grasse et de produit amylacé dont l'amidon n'est pas prégélatinisé, et d'homogénéiser ensuite ledit roux avec une quantité suffisante d'eau stérile.

EP 832566 décrit de son côté une sauce à base de fromage et d'amidon et son procédé de fabrication lors duquel l'homogénéisation des ingrédients est réalisée à une température inférieure à la température de gélatinisation de l'amidon.

FR2283636 décrit un procédé de préparation d'une crème alimentaire par homogénéisation sous haute pression d'un mélange contenant de l'eau, d'amidon, des protéines, des matières grasses et des émulsifiants.

JP 63007757 décrit une méthode de fabrication d'une émulsion crémeuse présentant une bonne résistance thermique. Dans ce cas, l'émulsion contient un émulsifiant et un agent de congélation.

GB 2220125 décrit un produit crémeux surgelé constitué d'une phase aqueuse amidonnée et d'une phase grasse dispersée. Un tel produit contient en outre, au moins un agent dépresseur de congélation, un agent dépresseur de l'activité de l'eau et dont la taille des particules de matière grasse est fixée à un maximum de 10 microns.

JP 63267250 décrit un procédé de fabrication d'une sauce par homogénéisation sous haute pression d'un mélange contenant de l'amidon et de la matière grasse mais nécessitant des émulsifiants conférant une bonne stabilité au produit.

WO 9848639 décrit une méthode de réduction calorique et/ou de la matière grasse d'un produit alimentaire par application d'une brusque et violente variation de pression audit produit alimentaire. Dans ce cas, but et résultat visés et atteints sont différents et éloignés de l'obtention d'un produit crémeux.

WO 9831240 décrit un procédé de préparation d'un agent de texturation composé d'amidon, d'eau et de protéine ; un tel mélange est chauffé de manière à gélatiniser l'amidon et dénaturer au moins partiellement les protéines. Le mélange obtenu est ensuite soumis à un traitement mécanique destiné à réduire la taille des particules en présence. Un tel procédé ne met pas en oeuvre de matière grasse et ne s'apparente pas à une émulsion. En effet le principal problème consiste à assurer la stabilité de tels mélanges contenant de la matière grasse.

Jusqu'à présent les produits alimentaires/culinaires crémeux et/ou onctueux du type sauces ou crèmes sont obtenus en mettant en oeuvre des ingrédients sapides et texturants tels que beurre, crème fraîche, oeufs, fromage, etc.

L'utilisation de tels ingrédients aboutit à des sauces à la texture riche et onctueuse et présentant une forte teneur en matière grasse. Le coût de revient de tels ingrédients est élevé et, de plus, les considérations nutritionnelles ont poussé les industriels à tenter de diminuer la matière grasse en la remplaçant, en partie, par des substituts comme des amidons modifiés ou d'autres hydrocolloïdes ayant des propriétés organoleptiques proches de la matière grasse. D'autre part des émulsifiants sont souvent ajoutés pour faciliter l'émulsification des sauces du type huile-dans-eau ou eau-dans-huile et leur conférer ainsi une stabilité accrue.

En effet lors des divers traitements technologiques industriels et/ou ménagers comme la congélation, la décongélation, le chauffage, les produits traditionnels (forte teneur en matière grasse type beurre et/ou crème) ne présentent pas une stabilité suffisante et on peut observer des phénomènes tels que synérèse, précipitation, agrégation néfastes à l'égard de l'acceptabilité du produit par le consommateur. Aussi, la diminution de la quantité et de la qualité de la matière grasse, l'utilisation d'amidons modifiés et surtout d'émulsifiants et surfactants alimentaires permet de remédier en partie à de tels défauts.

Le but de la présente invention consiste à proposer un procédé de fabrication de produit alimentaire à pouvoir crémeux en utilisant des ingrédients basiques peu onéreux tels qu'huile, pulpe végétale ou animale, amidon et eau, dont la teneur en matière grasse est réduite par rapport aux produits similaires standards et dont la stabilité aux étapes de gel/dégel et/ou chauffage est en outre accrue, ceci sans mettre en oeuvre d'agents émulsifiants et/ou d'autres stabilisants d'émulsion.

La présente invention a notamment pour objet un procédé de fabrication de produit culinaire à pouvoir crémeux dans lequel on soumet un mélange d'amidon prégélatinisé et/ou gonflé, de pulpe végétale ou animale, de matière grasse et d'eau à au moins un traitement mécanique à très fort cisaillement jusqu'à obtention d'une texture onctueuse et crémeuse.

L'invention a également pour objet un produit à pouvoir crémeux obtenu au moyen du procédé ci-dessus, et plus particulièrement un produit comprenant env. 1 à 25 % de matière grasse, env. 2,5 à 14% d'amidon et jusqu'à env. 55 % de pulpe végétale ou animale.

L'invention a également pour objet un produit culinaire tel que défini ci-dessus, à l'état surgelé : dans un tel cas, l'amidon prégélatinisé et/ou gonflé entrant dans sa préparation est en outre un amidon modifié, c'est à dire réticulé et/ou stabilisé.

Dans le présent procédé on peut préparer le mélange pulpe végétale ou animale/eau/huile/amidon et le traiter à une température et pour un temps suffisant pour gélatiniser l'amidon et ensuite, appliquer à cette mixture, le traitement à très fort cisaillement. On peut aussi utiliser un amidon prégélatinisé déshydraté et dans ce cas on mélangera les quatre ingrédients de base (eau, huile, amidon, pulpe végétale et/ou animale) à température ambiante pendant un temps suffisant, de manière à ce que l'amidon déshydraté gonfle et regagne l'eau perdue lors de la déshydratation.

Ainsi, en raison de l'impact important du cisaillement sur la dénaturation du gel d'amidon, plus le cisaillement est intense, plus la perte de viscosité du mélange traité est importante. On arrive ainsi à passer d'un produit pâteux, épaiset collant à un produit fluide, crémeux et présentant une texture en bouche particulièrement onctueuse. Il est aussi important de signaler que la texture finale du produit est fonction de l'intensité du cisaillement appliqué ; pour une intensité de cisaillement intermédiaire on peut obtenir un produit gommeux plus ou moins souple et plastique imitant le fromage, par exemple.

On peut aussi traiter le mélange tel qu'il n'incorpore qu'une partie de l'eau prévue dans le produit final, l'autre partie pouvant être ajoutée au mélange après le traitement de fort cisaillement de manière à ajuster la viscosité à une valeur désirée suivant le produit visé, par exemple.

Dans le produit selon l'invention, la matière grasse peut être une huile alimentaire animale ou végétale telle qu'une huile d'arachide, de tournesol, d'olive, de palme ou de beurre ou une matière grasse solide mais malléable à température ambiante tel que le beurre ou la margarine ou leurs mélanges, par exemple.

L'amidon peut provenir de tout féculent alimentaire notamment une céréale telle que le blé ou le maïs ou d'un légume à tubercule tel que la pomme de terre, l'igname ou le manioc ou encore le riz, par exemple.

L'amidon prégélatinisé peut être un amidon natif ou modifié chimiquement ou physiquement que l'on a prégélatinisé ou précuit et/ou gonflé dans l'eau bouillante entrant ensuite dans la composition finale du produit, par exemple. On peut aussi utiliser un amidon natif ou modifié chimiquement ou physiquement qui a subi une prégélatinisation ou précuisson suivie d'une déshydratation, par exemple.

Le produit selon l'invention comporte en % poids env. 1 à 25 % de matière grasse, env. 2,5 à 14 % d'amidon, la teneur en eau étant ajustée en conséquence. Le présent produit peut comprendre, en outre, en % du poids total, jusqu'à env. 10 % de solides non gras du lait, jusqu'à env. 55 % de pulpe végétale ou animale, jusqu'à env. 5 % de solides du blanc ainsi que des épices, du sel ou du sucre par exemple.

Des considérations nutritionnelles conduisent à formuler des produits crémeux et veloutés enrichis en fibres, en protéines et/ou en minéraux. Ainsi le produit selon l'invention peut être supplémenté en protéines d'origine animale et/ou végétale, en fibres soluble et/ insolubles ou en minéraux. Les protéines rajoutées peuvent l'être sous la forme de caséines, de protéines sériques, des protéines de légumineuses, ou d'isolats protéique végétal, par exemple. Les fibres peuvent être apportées de manière directe par addition d'inuline et/ou d'oligofructose par exemple, ou de manière indirecte via l'ajout de farine végétale telle que de la farine de lupin par exemple. La quantité de protéines additionnées peut atteindre environ 20%, celle en fibres environ 10 % et celle en minéraux environ 2 % du poids total.

Le procédé selon l'invention consiste à mélanger intimement les ingrédients de base que sont l'eau, la pulpe végétale et/ou animale, la matière grasse et l'amidon prégélatinisé de manière à former une masse épaisse, compacte et très visqueuse. Ce mélange est ensuite traité à l'aide d'un équipement exerçant un fort cisaillement correspondant à une pression d'homogénéisation de l'ordre de 150 à 600 bars. Un tel appareil peut être un extrudeur bi-vis du type BC 21 de la Société CLEXTRAL, un homogénéisateur à piston de la Société APV, un homogénéisateur haute-pression de type ALM de la Société PIERRE GUERIN ou tout autre équipement similaire capable d'appliquer une pression d'homogénéisation correspondant à un niveau de l'ordre de 150 à 600 bars.

L'ajout de pulpe végétale ou animale permet d'obtenir des produits à la texture riche et présentant aussi des couleurs plaisantes et modulables en fonction de la quantité et de la qualité des ingrédients mis en oeuvre. Les végétaux mis en oeuvre peuvent être des carottes, oignons, tomates, haricots verts, poivrons, champignons, grains de maïs, choux, fèves, pommes, poires, graines, noix, noisettes, par exemple. La pulpe animale peut être de la viande ou du poisson finement haché ou broyé comme de la chair d'anchois, de saumon, de sardine ou du jambon, par exemple.

Il est notable de remarquer qu'un traitement mécanique à fort cisaillement appliqué à un mélange eau/huile/amidon prégélatinisé/pulpe végétale et/ou animale modifie non seulement la texture du mélange en le transformant en une sauce crémeuse et onctueuse, mais aussi la couleur. Ainsi, dans le cas d'utilisation de pulpe de carotte le produit initial de couleur typique "orange carotte" est transformé en une sauce jaune/rosée, il est aussi intéressant et surprenant de noter que le produit final a perdu le goût typique de la carotte. Par conséquent, selon le ou les légumes mis en oeuvre, une large gamme de couleur peut être obtenue selon le rapport huile/légumes choisi. Du lait peut aussi être rajouté pour modifier texture et couleur et amener un douceur en bouche supplémentaire, par exemple. Aussi, au-delà de la texture onctueuse et crémeuse acquise grâce au procédé à fort cisaillement, la gamme de couleur que l'on peut obtenir et la possibilité de les mélanger permet d'ajuster la couleur désirée quelque soit le goût et/ou l'arôme choisis. On arrive ainsi, grâce à l'utilisation de végétauxs choisis à concevoir une palette de couleurs que l'on va pouvoir combiner pour créer un nuancier de couleurs presque infini.

En effet le procédé selon l'invention permet, et ce de manière surprenant de gommer le goût de certains des ingrédients mis en oeuvre. On peut ainsi développer, quelques soient les ingrédients de base utilisés, une base neutre sur le plan gustatif dont on aura défini la couleur grâce au ratio huile/pulpe végétale et que l'on pourra aromatiser à loisir.

De plus, il a été observé que l'effet de cisaillement est accru lorsque le mélange est concentré ; il est ainsi avantageux de traiter un mélange concentré et d'ajuster la viscosité à une valeur voulue grâce à un liquide comme de l'eau, du vin, du vinaigre ou tout autre fluide aqueux, par exemple.

Ainsi le traitement mécanique de fort cisaillement est-il responsable de plusieurs effets au niveau des ingrédients impliqués dans la texture finale du produit : (a) un effet de micro-broyage (notamment lors de la mise en oeuvre de pulpe végétale et/ou animale), (b) un effet de fort cisaillement qui entraîne la destruction des granules d'amidon et de la structure du gel et enfin (c) un effet d'homogénéisation.

Une alternative particulièrement intéressante du procédé consiste à faire subir le traitement mécanique de fort cisaillement au produit à une température de congélation de manière à congeler le produit dans a même temps qu'il est texturé. On peut ainsi traiter un mélange pulpe végétale et/ou animal/eau/huile/amidon modifié prégélatinisé à l'aide d'un appareil d'homogénéisation à fort pouvoir cisaillant tel un extrudeur bi-vis réfrigéré grâce à la circulation d'un fluide réfrigérant, alcool à -40 °C, circulant dans une enveloppe extérieure, par exemple. En traitant ainsi le mélange à une température de congélation, le produit sous l'effet conjoint de la basse température et du malaxage/cisaillement sévères durant le transport à l'intérieur du cylindre se transforme en un produit présentant une texture ferme mais malléable, facilement moulable, dont la température est de l'ordre de -2°C à -10°C environ. Dans le cas de la fabrication de produit crémeux surgelé ou destiné à être surgelé, l'utilisation d'amidons réticulés et/ou stabilisés s'impose pour conférer la stabilité thermique au produit fini et éviter rétrogradation, synérèse et/ou précipitation lors des étapes de gel/dégel et/ou chauffage. Ainsi de par la forte stabilité du produit contenant de l'amidon réticulé et/ stabilisé prégélatinisé soumis à fort cisaillement, la congélation peut être réalisée de manière concomitante au traitement de fort cisaillement ou après ledit traitement par la mise en série d'un équipement capable d'assurer une pression d'homogénéisation supérieure à 150 bars suivi d'un équipement capable de congeler le produit.

ll est surprenant d'observer que l'utilisation d'amidons stabilisés et/ou réticulés permet d'obtenir une texture crémeuse et onctueuse. En effet ce type d'additif est destiné à conférer une fermeté et une texture gélifiée au produit dans lequel il est ajouté. Il semble que le traitement mécanique de fort cisaillement désorganise le réseau stabilisé de manière à entraîner une fluidisation du produit qui garde tout de même une stabilité forte vis à vis des phénomènes de rétrogradation.

Il est avantageux de pouvoir mettre en oeuvre de quantités importantes d'amidon (jusqu'à 14 % en remplacement d'ingrédients onéreux comme beurre, oeufs, crème) inutilisables dans les recettes et procédés standards de fabrication de sauces

Les exemples ci-après illustrent quelques formes de réalisation du présent produit et du présent procédé de fabrication et ne sont nullement limitatifs quant à la qualité et aux quantités des ingrédients utilisés. Dans ces exemples les pourcentages sont donnés en poids sauf indication contraire.

### EXEMPLE 1 : sauce tomate

| | |
|---|---|
| Sauce tomate (37 °Brix): | 20 % |
| Huile de tournesol: | 2 % |
| Amidon instantané (Ultrasperce*) : | 4,5 % |
| Sel : | 0.5% |
| Sucre : | 0,3 % |
| Eau : complément à | 100 % |

| | |
|---|---|
| **Amidon réticulé commercialisé par la Société National Starch* | |

Les ingrédients sont mis en agitation à température ambiante, c'est à dire 15-30 °C, durant un temps suffisant pour que l'amidon gonfle en réabsorbant une quantité d'eau comparable à celle qu'il avait perdue lors déshydratation après prégélatinisation, soit environ 30 min.. Un pré-traitement mécanique à l'aide d'une pompe à cisaillement est réalisé de manière à faciliter la pompabilité du mélange. Le mélange est ensuite homogénéisé à l'aide d'un homogénéisateur haute pression ALM de la société Pierre Guérin à température ambiante. La viscosité désirée est obtenue grâce à deux homogénéisations successives avec cet appareil. La sauce ainsi obtenue présente une texture fluide et crémeuse et une couleur plus rosée/orangée que le produit avant cisaillement. La sauce peut ensuite être mise en agitation lente de manière à effectuer des corrections d'assaisonnement et/ou rajout d'ingrédients solides ou liquides tels que morceaux de viande ou de poissons, par exemple.

Le mélange épais eau/huile/amidon/sauce tomate/sel/sucre peut aussi être introduit à l'intérieur d'un homogénéisateur à piston à double passage travaillant à 500 bars (Société APV) et à température ambiante cette fois. La sauce obtenue après un tel traitement est similaire au produit obtenu grâce à l'extrudeur réfrigérant après décongélation (paragraphe précédent), c'est à dire une sauce fluide, de couleur blanc brillant et présentant une texture onctueuse en bouche. La sauce obtenue peut être ensuite réfrigérée ou congelée selon les moyens classiques pour une consommation et/ou utilisation ultérieure.

Le mélange épais eau/huile/amidon/sauce tomate/sel/sucre peut être introduit dans l'entrée d'un extrudeur bi-vis de type BC21 fabriqué par la Société CLEXTRAL. L'extrudeur est équipé de neufs éléments permettant la congélation du produit par circulation d'alcool refroidi à -40 °C. Le mélange ressort de l'appareil sous forme de boudin à la texture ferme présentant une température de -2.8°C facile à mouler et d'une couleur blanc brillant. Après décongélation et réchauffage la couleur persiste mais la viscosité a disparu et le produit ressemble à une crème fraîche fluide, homogène, de texture en bouche onctueuse et stable sans aucune séparation de phase ni synérèse.

### EXEMPLE 2 : Purée de Carottes

| | |
|---|---|
| Pulpes de carottes : | 40% |
| Huile de tournesol: | 10% |
| Amidon de pomme de terre : | 4,5 % |
| Eau : complément à | 100% |

on cuit le mélange eau/huile/amidon par chauffage sous agitation jusqu'à 95° C et on l'y maintient pendant 5 minutes. Cette base est ensuite refroidie. Elle est ensuite mélangée à la pulpe de carottes et l'ensemble subit un traitement mécanique de fort cisaillement à l'aide d'un homogénéisateur haute pression du type de celui utilisé dans l'exemple 1. Après un tel traitement la sauce présente un aspect crémeux et onctueux dont la couleur est aussi modifiée par rapport au mélange avant cisaillement c'est à dire plus clair.

### EXEMPLE 3 : Soupe supplémentée en protéines, fibres et calcium

| | |
|---|---|
| Oignons/carottes/tomates : | 35 % |
| Huile de tournesol : | 6.5 % |
| Amidon de maïs : | 4.5 % |
| Protéines en poudre (caséinate de Calcium, protéines sériques, isolat protéique de pois, extrait de levure alimentaire) | 16 % |
| Fibres (inuline, oligofructose) : | 4 % |
| Supplément minéral Calcium : | 1 % |
| Eau : complément à | 100 % |

Les ingrédients sont mélangés de manière identique à le méthode employée à l'exemple 2. Le traitement mécanique peut être réalisé de manière analogue grâce à un homogénéisateur à piston à double passage travaillant à 500 bars (Société APV) et à température ambiante. Le produit cisaillé obtenu dont la consistance s'apparente à une crème épaisse sera ensuite dilué avec de l'eau ou du lait de manière à raison d'un volume de liquide pour deux volume de base. On obtient ainsi un potage velouté de texture onctueuse et de composition nutritionnelle optimale.

### EXEMPLE 4 : Beurre d'anchois

| | |
|---|---|
| Margarine : | 7.5 % |
| Beurre: | 4% |
| Amidon de maïs : | 8 % |
| Pulpe d'anchois: | 15% |
| Purée de tomate : | 12% |
| Blanc d'oeuf en poudre : | 1% |
| Eau : complément à | 100% |

Les ingrédients sont mélangés de manière analogue aux exemples précédents, à température ambiante. Le traitement mécanique est réalisé en deux étapes : une première est réalisée à l'aide d'une pompe à cisaillement, la seconde à l'aide d'un homogénéisateur à piston du type de celui utilisé dans l'exemple précédent.

De manière analogue le traitement mécanique peut être réalisé à l'aide d'un extrudeur du type BC 21 réfrigéré et dans ce cas l'amidon de maïs utilisé est un amidon réticulé. Le produit obtenu est tartinable à température ambiante (après décongélation si le produit est congelé) et s'apparente à un beurre d'anchois classique.

Une variante du procédé de fabrication du beurre d'anchois selon la présente recette consiste à inclure de l'air lors du traitement mécanique à l'aide de l'extrudeur de manière à foisonner le produit. Finalement la texture grasse et tartinable est améliorée par l'inclusion d'air.

### EXEMPLE 5 : Beurre de cacahuètes

| | |
|---|---|
| Pulpe de carotte : | 28 % |
| Cacahuète grillée : | 20 % |
| Purée de pomme concentrée : | 20 % |
| Graisse végétale hydrogénée : | 15 % |
| Amidon modifié Ultra sperse 5*(prégélatinisé) : | 5.5 % |
| Sucre : | 3.5 % |
| Lait poudre écrémé : | 3 % |
| caramel colorant : | 1 % |
| Arômes : | 0.7 % |
| Sel fin : | 0.5 % |
| Eau : complément à | 100 % |

*Amidon réticulé et stabilisé commercialisé par la société National Starch*

Les ingrédients sont mélangés en continu avec recirculation de broyage à l'aide d'une pompe à cisaillement puis soumis au traitement mécanique de fort cisaillement en deux étapes grâce à un homogénéisateur haute pression comme dans l'exemple 1.

## Revendications

1. Produit alimentaire à pouvoir crémeux susceptible d'être obtenu par traitement mécanique de cisaillement d'un mélange d'eau, de pulpe végétale ou animale, de matière grasse et d'amidon prégélatinisé et/ou gonflé, sans mettre en oeuvre d'agents émulsifiants et/ou d'autres stabilisants d'émulsion.

2. Produit alimentaire selon la revendication 1, comprenant 1 à 25 % de matière grasse, 2,5 à 14 % d'amidon et jusqu'a 55 % de pulpe végétale ou animale.

3. Produit alimentaire selon l'une des revendications 1 et 2, à l'état surgelé, présentant une stabilité lors des étapes de décongélation et/ou chauffage , **caractérisé en ce qu'**il comprend 2,5 à 14 % d'amidon modifié.

4. Produit alimentaire selon l'une des revendications précédentes présentant un degré de foisonnement de 40 à 120 %.

5. Produit selon l'une des revendications précédentes comprenant en outre, en poids total, jusqu'à 10 % de solides non gras du lait, jusqu'à 5 % de solides du blanc ou du jaune d'oeuf et jusqu'à 40 % de fromage.

6. Produit selon l'une des revendications précédentes, **caractérisé en ce qu'**il comporte en outre, en % du poids total, jusqu'à 20 % de protéines rajoutées, jusqu'à 10 % de fibres rajoutées et jusqu'à 2 % de minéraux rajoutés.

7. Procédé de fabrication d'un produit alimentaire à pouvoir crémeux selon la revendication 1, **caractérisé en ce qu'**on soumet un mélange d'amidon prégélatinisé et/ou gonflé, de pulpe végétale ou animale, de matière grasse et d'eau à au moins un traitement mécanique de cisaillement, jusqu'à l'obtention d'une texture fluide et onctueuse, sans mettre en oeuvre d'agents émulsifiants et/ou d'autres stabilisants d'émulsion.

8. Procédé selon la revendication 7 de fabrication d'un produit alimentaire à pouvoir crémeux surgelé, **caractérisé en ce que** l'amidon est un amidon modifié et que le produit est congelé simultanément ou après le traitement mécanique de cisaillement.

9. Procédé selon l'une des revendications 7 à B, dans lequel le mélange soumis à cisaillement comprend 1 à 25 % de matière grasse, 2,5 à 14 % d'amidon et jusqu'à 55 % de pulpe végétale ou animale.

10. procédé selon l'une des revendications 7 à 9, dans lequel le traitement mécanique de cisaillement correspond à un niveau de pression d'homogénéisation compris entre env. 150 et 600 bars.

11. Procédé selon l'une des revendications 7 à 10, comprenant en outre l'ajout en % de poids total, de solides non gras du lait jusqu'à 10 %, de solides du blanc ou du jaune d'oeuf jusqu'à 5 % et de fromage jusqu'à 40 %.

12. Procédé selon l'une des revendications 7 à 11, **caractérisé en ce qu'**il comprend en outre l'ajout, en % du poids total, de protéines jusqu'à 20 %, de fibres jusqu'à 10 % et de minéraux jusqu'à 2 %.

13. Procédé selon l'une des revendications 7 à 12, danslequel une partie de la quantité d'eau finale comprise dans le produit est rajoutée après le traitement mécanique de cisaillement.

14. Procédé selon les revendications 7 à 13, dans lequel l'eau est remplacée en tout ou partie par un autre fluide aqueux.

15. Plat cuisiné obtenu par la mise en oeuvre du produit selon l'une des revendications 1 à 6.

## Claims

1. A food product with creamy capacity, capable of being obtained by mechanical shearing treatment of a mixture of water, vegetable or animal pulp, fat and pre-gelatinised and/or swollen starch without using emulsifying agents and/or other emulsion stabilisers.

2. Food product according to Claim 1, comprising 1% to 25 % fat, 2.5% to 14% starch, and up to 55% vegetable or animal pulp.

3. Food product according to one of Claims 1 and 2, in the deep-frozen state, exhibiting stability in the course of the defrosting and/or heating stages, **characterised in that** it comprises 2.5 % to 14 % modified starch.

4. Food product according to one of the preceding claims, exhibiting a degree of expansion from 40% to 120%.

5. Food product according to one of the preceding claims, further comprising, in total weight, up to 10% non-fat milk solids, up to 5 % solids of egg white or egg yolk, and up to 40 % cheese.

6. Food product according to one of the preceding claims, **characterised in that** it further includes, in percentage of the total weight, up to 20 % added proteins, up to 10 % added fibres, and up to 2 % added minerals.

7. A process for manufacturing a food product with creamy capacity according to Claim 1, **characterised in that** a mixture of pre-gelatinised and/or swollen starch, vegetable or animal pulp, fat and water is subjected to at least one mechanical shearing treatment until a fluid and unctuous texture is obtained without using emulsifying agents and/or other emulsion stabilisers.

8. Process according to Claim 7 for manufacturing a deep-frozen food product with creamy capacity, **characterised in that** the starch is a modified starch and **in that** the product is frozen simultaneously with or after the mechanical shearing treatment.

9. Process according to one of Claims 7 to 8, wherein the mixture subjected to shearing comprises 1% to 25% fat, 2.5% to 14% starch, and up to 55% vegetable or animal pulp.

10. Process according to one of Claims 7 to 9, wherein the mechanical shearing treatment corresponds to a homogenisation pressure level between about 150 bar and 600 bar.

11. Process according to one of Claims 7 to 10, further comprising the addition, in percentage of total weight, of up to 10% non-fat milk solids, up to 5% solids of egg white or egg yolk, and up to 40 % cheese.

12. Process according to one of Claims 7 to 11, **characterised in that** it further comprises the addition, in percentage of the total weight, of up to 20% proteins, up to 10% fibres, and up to 2% minerals.

13. Process according to one of Claims 7 to 12, wherein a portion of the final quantity of water contained in the product is added after the mechanical shearing treatment.

14. Process according to Claims 7 to 13, wherein the water is replaced in whole or in part by another aqueous fluid.

15. A cooked dish obtained by using the product according to one of Claims 1 to 6.

## Patentansprüche

1. Nahrungsmittelprodukt mit cremigen Eigenschaften, das durch mechanische Scherbehandlung einer Mischung aus Wasser, pflanzlicher oder tierischer Pülpe, Fett und vorgelierter und/oder gequollener Stärke ohne Einsatz von Emulgatoren und/oder anderen Emulsionsstabilisatoren hergestellt werden kann.

2. Nahrungsmittelprodukt nach Anspruch 1, das 1 bis 25 % Fett, 2,5 bis 14 % Stärke und bis zu 55 % pflanzliche oder tierische Pülpe umfasst.

3. Nahrungsmittelprodukt nach einem der Ansprüche 1 und 2 im gefrorenen Zustand, das bei Auftau- und/oder Erwärmungsschritten Stabilität aufweist, **dadurch gekennzeichnet, dass** es 2,5 bis 14 % modifizierte Stärke umfasst.

4. Nahrungsmittelprodukt nach einem der vorhergehenden Ansprüche mit einem Volumenserweiterungsgrad von 40 bis 120 %.

5. Produkt nach einem der vorhergehenden Ansprüche, das außerdem, bezogen auf das Gesamtgewicht, bis zu 10 % Nichtfett-Feststoffe der Milch, bis zu 5 % Eiweiß- oder Eigelb-Feststoffe und bis zu 40 % Käse umfasst.

6. Produkt nach einem der vorhergehenden Ansprüche, **dadurch gekennzeichnet, dass** es außerdem bis zu 20 % zugesetzte Proteine, bis zu 10 % zugesetzte Fasern und bis zu 2 % zugesetzte Mineralstoffe, in % des Gesamtgewichts, umfasst.

7. Verfahren zur Herstellung eines Nahrungsmittelprodukts mit cremigen Eigenschaften nach Anspruch 1, **dadurch gekennzeichnet, dass** man eine Mischung aus vorgelierter und/oder gequollener Stärke, pflanzlicher oder tierischer Pülpe, Fett und Wasser mindestens einer mechanischen Scherbehandlung ohne Einsatz von Emulgatoren und/oder anderen Emulsionsstabilisatoren unterzieht, bis man eine fließfähige und sämige Textur erhält.

8. Verfahren nach Anspruch 7 zur Herstellung eines Nahrungsmittelprodukts mit gefrorenen cremigen Eigenschaften, **dadurch gekennzeichnet, dass** die Stärke eine modifizierte Stärke ist und dass das Produkt gleichzeitig mit oder nach der mechanischen Scherbehandlung tiefgefroren wird.

9. Verfahren nach einem der Ansprüche 7 bis 8, bei dem die der Scherung unterzogene Mischung 1 bis 25 % Fett, 2,5 bis 14 % Stärke und bis zu 55 % pflanzliche oder tierische Pülpe umfasst.

10. Verfahren nach einem der Ansprüche 7 bis 9, bei dem die mechanische Scherbehandlung einem Homogenisierungsdruck zwischen etwa 150 und 600 bar entspricht.

11. Verfahren nach einem der Ansprüche 7 bis 10, das außerdem den Zusatz von bis zu 10 % Nichtfett-Feststoffen der Milch, bis zu 5 % Eiweiß- oder Eigelb-Feststoffen und bis zu 40 % Käse, in % des Gesamtgewichts, umfasst.

12. Verfahren nach einem der Ansprüche 7 bis 11, **dadurch gekennzeichnet, dass** es außerdem den Zusatz von bis zu 20 % Proteinen, bis zu 10 % Fasern und bis zu 2 % Mineralstoffen, in % des Gesamtgewichts, umfasst.

13. Verfahren nach einem der Ansprüche 7 bis 12, bei dem ein Teil der im Produkt enthaltenen endgültigen Wassermenge nach der mechanischen Scherbehandlung zugesetzt wird.

14. Verfahren nach den Ansprüche 7 bis 13, bei dem das Wasser ganz oder teilweise durch ein anderes wässriges Fluid ersetzt ist.

15. Fertiggericht, das durch die Verwendung des Produkts nach einem der Ansprüche 1 bis 6 erhalten wird.
